# FASCICULE DE BREVET EUROPEEN

(11) **EP 3 476 097 B1**
(45) Date de publication et mention de la délivrance du brevet: **06.01.2021**
(21) Numéro de dépôt: 17740438.1
(22) Date de dépôt: 19.06.2017
(51) Int. Cl.: H04W 4/60, H04L 29/06, H04W 12/04, H04W 12/06

(54) **TECHNIQUE DE TÉLÉCHARGEMENT D'UN PROFIL D'ACCÈS À UN RÉSEAU**
VERFAHREN ZUM HERUNTERLADEN EINES NETZWERKZUGANGSPROFILS
TECHNIQUE FOR DOWNLOADING A NETWORK ACCESS PROFILE

(30) Priorité: 24.06.2016 FR 1655913
(43) Date de publication de la demande: 01.05.2019
(73) Titulaire: ORANGE, 75015 Paris (FR)
(72) Inventeur: GHAROUT, Saïd, 92326 Chatillon Cédex (FR); COUREAU, Laurent, 91420 MORANGIS (FR)
(86) Numéro de dépôt international: PCT/FR2017/051597
(87) Numéro de publication internationale: WO 2017/220904

(56) Documents cités:
- EP-A1- 2 680 628
- US-A1- 2014 287 725
- GSM Association: "RSP Technical Specification Version 1.1", , 9 juin 2016 (2016-06-09), pages 1-125, XP055320845, Extrait de l'Internet: URL:http://www.gsma.com/rsp/wp-content/upl oads/docs/SGP.22 v1.1.pdf [extrait le 2016-11-18]
- GSM Association: "Remote Provisioning Architecture for Embedded UICC Technical Specification : Version 3.1", , 27 mai 2016 (2016-05-27), pages 1-297, XP055320853, Extrait de l'Internet: URL:http://www.gsma.com/connectedliving/wp -content/uploads/2016/07/SGP.02_v3.1.pdf [extrait le 2016-11-18]

## Description

L'invention se rapporte au domaine général des télécommunications.

L'invention concerne plus particulièrement une technique de téléchargement d'un profil d'accès à un réseau de communication par un module de sécurité.

La technique de téléchargement se situe dans le domaine des terminaux de communication mobile, et plus particulièrement des cartes eUICC dites embarquées (« embedded »). Une carte eUICC embarquée permet à un dispositif utilisateur mobile de fonctionner avec des abonnements auprès de plusieurs opérateurs avec une seule et même carte eUICC qui peut être non amovible.

L'association GSMA (pour « Global System for Mobile Communications ») développe des spécifications techniques pour une carte de type « eUICC » (de l'anglais « embedded Universal Integrated Circuit Card ») jouant le rôle d'un module de sécurité, prévue pour être embarquée dans un dispositif utilisateur mobile. Un tel module de sécurité peut être inamovible et il est alors nécessaire d'effectuer des actions à distance, par exemple le reprogrammer. La spécification technique de la GSMA « SGP.22 - RSP Technical Specification» v.1.1 datée du 9 juin 2016 (disponible sur le site de la GSMA à l'adresse http://www.gsma.com/newsroom/all-documents/sgp-22-technical-specification-v1-1/) spécifie une gestion de configuration à distance d'une carte eUICC (ou module de sécurité). Ainsi, lors de l'acquisition d'un nouveau terminal mobile, il n'est plus nécessaire de manipuler au préalable le module de sécurité afin d'accéder au réseau d'un opérateur, voire de le changer lors d'un changement d'opérateur. Un profil d'accès correspond à un ensemble de données et d'applications qui permettent au terminal mobile, une fois le profil activé, d'accéder au réseau d'un opérateur. Il est prévu qu'un utilisateur puisse s'abonner directement via une interface homme-machine de son dispositif utilisateur, ou en se rendant dans une boutique de l'opérateur ou/et qu'il installe un profil d'accès au réseau. Il est également prévu qu'il puisse changer d'opérateur de la même façon.

Pour ce faire, l'utilisateur obtient un code d'activation AC (pour « Activation Code ») lui permettant de contacter un serveur chargé de la préparation des données de gestion de souscription SM-DP+ (pour « Subscription Manager Data Preparation+ ») afin de télécharger un profil d'accès qui a été préparé pour lui. Ce code d'activation comprend notamment une adresse du serveur SM-DP+ à contacter pour obtenir le profil d'accès et un identifiant de celui-ci. Ce serveur SM-DP+ dispose en particulier d'un certificat de clé publique de téléchargement signé par une entité CI (pour « Certificate Issuer ») pour une utilisation lors d'une association d'un dossier de profil (ou « Profile Package Binding » en anglais). Ce certificat de clé publique de téléchargement est utilisé lors des échanges entre le serveur SM-DP+ et le module de sécurité, afin de garantir au module de sécurité qu'il est bien connecté au serveur SM-DP+ qui a été identifié par l'opérateur ayant fourni le code d'activation. Le certificat est signé au moyen d'une clé privée de l'entité CI. La sécurité lors du téléchargement du profil d'accès s'appuie alors sur la confiance que l'opérateur de réseau a dans ce serveur SM-DP+ et dans l'autorité qui a généré le certificat de clé publique de téléchargement.

La clé privée de l'entité CI pourrait être volée par un dispositif attaquant l'entité CI. Des certificats pourraient alors être signés par ce dispositif attaquant à l'aide de la clé privée volée pour des serveurs SM-DP+. Des faux profils pourraient alors être installés dans le module de sécurité à l'aide de codes d'activation valides, sans que cela ne soit détecté par le module de sécurité. La publication brevet US2014/287725A1 décrit un procédé de téléchargement d'un profil d'accès à un réseau.

Un des buts de l'invention est de remédier à des insuffisances/inconvénients de l'état de la technique et/ou d'y apporter des améliorations. L'invention est définie dans les revendications indépendantes 1, 8, 9, 10 et 11.

Selon un premier aspect, l'invention a pour objet un procédé de téléchargement d'un profil d'accès à un réseau de communication par un module de sécurité, ledit profil d'accès étant préparé pour un utilisateur par un opérateur de réseau et disponible auprès d'un serveur configuré pour fournir par téléchargement au module de sécurité ledit profil d'accès. Ce procédé comprend :
- une obtention par le module de sécurité d'une première donnée de vérification préparée par ledit opérateur de réseau ;
- un établissement d'une session sécurisée de téléchargement, au cours duquel des clés de session sont générées de manière conjointe entre le serveur et le module de sécurité et dans lequel le serveur est authentifié par le module de sécurité au moyen d'une clé publique de téléchargement ;
- une vérification par le module de sécurité de l'authenticité de la clé publique de téléchargement du serveur au moyen de la première donnée de vérification ;
- lorsque la clé publique de téléchargement n'est pas vérifiée authentique, une interruption du téléchargement du profil d'accès.

Plus précisément, la vérification de l'authenticité de la clé publique de téléchargement du serveur au moyen de la première donnée de vérification permet de vérifier que le serveur utilise une clé secrète de téléchargement correspondant à celle prévue par l'opérateur de réseau lors de la préparation de la première donnée de vérification.

Le procédé de téléchargement tire son origine d'un problème constaté pour la mise en œuvre d'un profil d'accès sur un module de sécurité de type carte eUICC. Il est toutefois applicable à d'autres types de modules de sécurité, tels que ceux hébergés à distance dans le réseau ou bien ceux mis en œuvre par le terminal mobile lui-même.

Il est ainsi possible de vérifier avant le téléchargement effectif du profil d'accès que le serveur apte à fournir par téléchargement au module de sécurité ce profil d'accès, également appelé serveur chargé de la préparation des données de gestion de souscription, dispose bien d'un couple de clés de téléchargement, clé privée et clé publique associée, dont la clé publique de téléchargement correspond à celle connue de, ou attendue par, l'opérateur de réseau. La première donnée de vérification a été préparée par l'opérateur de réseau et est ainsi fournie en dehors des échanges avec le serveur. La première donnée de vérification correspond par exemple à un condensé de la clé publique de téléchargement du serveur. Lorsque la clé publique de téléchargement n'est pas vérifiée authentique, l'établissement de la session sécurisée de téléchargement est interrompu et par conséquent, il en est de même pour la procédure de téléchargement. Dans le cas contraire, la procédure de téléchargement peut se poursuivre avec des clés de session générées de manière conjointe entre le serveur et le module de sécurité (sous réserve du résultat d'autres vérifications de données d'authentification le cas échéant). La mise en œuvre du procédé permet ainsi d'améliorer la sécurité du téléchargement d'un profil d'accès, en ne vérifiant pas uniquement une identité du serveur apte à fournir par téléchargement au module de sécurité ce profil d'accès et une authenticité de certificats de clé publique de téléchargement du serveur.

La vérification que la clé publique de téléchargement est authentique au moyen de la première donnée de vérification est effectuée au moment des échanges entre le serveur et le module de sécurité pour un établissement d'une session sécurisée avec authentification mutuelle permettant de générer des clés de session pour chiffrer le profil d'accès. Le serveur utilise donc sa clé privée de téléchargement à laquelle est associée la clé publique de téléchargement pour s'authentifier auprès du module de sécurité durant la génération des clés de session. Il s'agit du dernier échange avec le serveur avant le téléchargement effectif du profil d'accès. Cette vérification intervient donc au plus près du téléchargement pour protéger le téléchargement du profil d'accès. Cela permet à l'opérateur de contrôler la distribution de ses profils d'accès et de s'assurer que le profil d'accès est installé dans le module de sécurité prévu à partir du serveur SM-DP+ attendu.

Dans un premier exemple, lorsque la clé privée de l'entité émettrice des certificats est compromise, un attaquant peut établir de faux certificats de clé publique pour un serveur SM-DP+ malicieux et télécharger des faux profils d'accès dans le module de sécurité. La vérification que la clé publique de téléchargement du serveur correspond bien à celle prévue par l'opérateur de réseau permet d'éviter un éventuel téléchargement de faux profils d'accès. Ainsi, le téléchargement du profil d'accès est protégé même si l'émetteur de certificats qui a signé le certificat de clé publique du serveur SM-DP+ est attaqué.

Dans un deuxième exemple, le serveur SM-DP+ peut disposer de plusieurs certificats de clé publique de téléchargement, émis par plusieurs entités émettrices de certificat. L'opérateur de réseau a ainsi la garantie que le serveur va bien utiliser le couple de clés de téléchargement auquel il fait confiance, soit parce qu'il l'a lui-même fourni, soit parce qu'il a été fourni par une entité de confiance.

La vérification de l'authenticité de la clé publique au moyen de la première donnée de vérification empêche ainsi le serveur SM-DP+ d'installer le profil d'accès avec un autre certificat qui serait moins protégé que celui prévu pour la distribution du profil.

La première donnée de vérification est par exemple fournie au dispositif utilisateur lors de l'obtention d'un code d'activation préparé par l'opérateur de réseau. Ce code d'activation comprend les données nécessaires au dispositif utilisateur pour télécharger le profil d'accès qui a été préparé pour lui.

Dans un mode de réalisation particulier, le serveur dispose de trois couples de clés : un premier dédié à l'établissement d'une connexion sécurisée avec le dispositif utilisateur, un deuxième dédié à l'authentification par le module de sécurité du serveur et le troisième dédié à la phase de téléchargement. La mise en œuvre du procédé permet donc de garantir que le serveur utilise bien le couple de clés de téléchargement lors de la phase de téléchargement.

Dans un mode de réalisation particulier, une phase d'authentification du serveur est effectuée par le module de sécurité préalablement à l'établissement d'une session sécurisée de téléchargement. Cette authentification peut être mutuelle.

Les différents modes ou caractéristiques de réalisation mentionnés ci-après peuvent être ajoutés indépendamment ou en combinaison les uns avec les autres, au procédé de téléchargement tel que défini précédemment.

Dans un mode de réalisation particulier du procédé de téléchargement, l'établissement de la session sécurisée de téléchargement est déclenché par une réception par le module de sécurité d'une demande d'ouverture de session sécurisée de téléchargement, ladite demande comprenant une clé publique à usage unique pour un accord de clés de sessions générée par le serveur et une signature des données de ladite demande au moyen d'une clé privée de téléchargement du serveur à laquelle est associée la clé publique de téléchargement.

Cette clé publique à usage unique est utilisée par la suite pour générer de manière conjointe les clés de session. Les clés de session sont générées, par exemple, à partir d'un accord de clé entre le serveur et le module de sécurité. C'est un accord de clé authentifié où les clés privées des deux entités sont utilisées pour fournir l'authentification lors de la génération des clés de session. Il est donc important d'avoir l'assurance que le serveur a bien utilisé la clé privée de téléchargement pour signer les données du message, dont cette clé à usage unique.

Selon une caractéristique particulière du procédé de téléchargement, la vérification de l'authenticité est effectuée lors d'une réception par le module de sécurité d'une demande de préparation du téléchargement, ladite demande comprenant un certificat de clé publique de téléchargement du serveur, préalablement à la réception de la demande d'ouverture de session sécurisée de téléchargement.

Dans ces échanges pour la préparation du téléchargement, le module de sécurité reçoit le certificat de clé publique de téléchargement du serveur et vérifie l'authenticité de ce certificat. La vérification de l'authenticité de la clé publique de téléchargement à ce stade des échanges permet ainsi d'interrompre plus tôt la procédure de téléchargement lorsque la clé publique de téléchargement ne correspond pas à la clé publique prévue par l'opérateur de réseau.

Selon une caractéristique particulière du procédé de téléchargement, le module de sécurité obtient en outre une deuxième donnée de vérification, vérifie au moyen de la deuxième donnée de vérification une clé publique d'authentification du serveur, reçue pendant une phase d'authentification du serveur par le module de sécurité, et lorsque la clé publique d'authentification n'est pas vérifiée authentique, interrompt le téléchargement du profil d'accès.

Dans ce mode de réalisation particulier, le serveur dispose d'au moins deux certificats de clé publique, un premier dédié à l'authentification et un deuxième dédié au téléchargement du profil d'accès proprement dit.

Ceci permet de renforcer la sécurisation de la procédure de téléchargement en détectant que le serveur n'utilise pas le couple de clés prévu pour l'authentification.

La deuxième donnée de vérification est par exemple fournie au dispositif utilisateur lors de l'obtention d'un code d'activation préparé par l'opérateur de réseau en association avec la première donnée de vérification.

Selon une caractéristique particulière du procédé de téléchargement, la vérification de l'authenticité de la clé publique d'authentification est effectuée lors de la phase d'authentification du serveur par le module de sécurité.

Ceci permet de renforcer la sécurisation de la procédure de téléchargement en détectant au moment de l'authentification que le serveur n'utilise pas le couple de clés prévu pour l'authentification.

Alternativement, selon une caractéristique particulière du procédé de téléchargement, la vérification de l'authenticité de la clé publique d'authentification est déclenchée suite à la réception de la demande d'ouverture de session sécurisée de téléchargement.

Ceci permet de ne pas modifier les actions du module de sécurité pendant la phase d'authentification du serveur, tout en renforçant la sécurité quant à l'utilisation par le serveur d'une clé privée d'authentification associée à une clé publique d'authentification prévue par l'opérateur de réseau.

Dans un mode de réalisation particulier du procédé de téléchargement, l'établissement de la session sécurisée de téléchargement est déclenché par une réception par le module de sécurité d'une demande d'exécution d'une opération de sécurité, ladite demande comprenant la clé publique de téléchargement destinée à contribuer à la génération des clés de session.

Dans ce mode de réalisation particulier, pour générer les clés de session, le serveur utilise la clé privée de téléchargement et le module de sécurité utilise la clé publique de téléchargement du serveur. Il est donc important de vérifier que le serveur utilise bien la clé privée de téléchargement prévue par l'opérateur de réseau.

Selon un deuxième aspect, l'invention concerne également un module de sécurité comprenant :
- un sous-module d'émission/réception, agencé pour obtenir une première donnée de vérification préparée par un opérateur de réseau ;
- un sous-module de contrôle, agencé pour établir une session sécurisée de téléchargement, au cours duquel des clés de session sont générées de manière conjointe entre un serveur, auprès duquel un profil d'accès préparé par ledit opérateur de réseau est disponible pour téléchargement, et le module de sécurité et dans lequel le serveur est authentifié par le module de sécurité au moyen d'une clé publique de téléchargement, pour vérifier l'authenticité de la clé publique de téléchargement du serveur au moyen de la première donnée de vérification permettant de vérifier que le serveur utilise une clé secrète de téléchargement correspondant à celle prévue par l'opérateur de réseau lors de la préparation de la première donnée de vérification et pour déclencher une interruption du téléchargement du profil d'accès lorsque la clé publique de téléchargement n'est pas vérifiée authentique.

Ce module de sécurité peut bien sûr comporter en termes structurels les différentes caractéristiques relatives au procédé de téléchargement tel que décrit précédemment, qui peuvent être combinées ou prises isolément. Ainsi, les avantages énoncés pour le procédé de téléchargement selon le premier aspect sont transposables directement au module de sécurité. Par conséquent, ils ne sont pas détaillés plus amplement.

Selon un troisième aspect, l'invention concerne également un terminal agencé pour communiquer avec un serveur auprès duquel un profil d'accès préparé par un opérateur de réseau est disponible pour téléchargement, ledit terminal comprenant :
- un module d'obtention d'une première donnée de vérification préparée par ledit opérateur de réseau ;
- un module de contrôle, agencé pour établir une session sécurisée de téléchargement, au cours de laquelle des clés de session sont générées de manière conjointe entre le serveur et un module de sécurité et dans lequel le serveur est authentifié par le module de sécurité au moyen d'une clé publique de téléchargement, pour vérifier l'authenticité d'une clé publique de téléchargement du serveur au moyen de la première donnée de vérification permettant de vérifier que le serveur utilise une clé secrète de téléchargement correspondant à celle prévue par l'opérateur de réseau lors de la préparation de la première donnée de vérification et pour déclencher une interruption du téléchargement du profil d'accès lorsque la clé publique de téléchargement n'est pas vérifiée authentique.

Ce terminal peut bien sûr comporter en termes structurels les différentes caractéristiques relatives au procédé de téléchargement tel que décrit précédemment, qui peuvent être combinées ou prises isolément. Ainsi, les avantages énoncés pour le procédé de téléchargement selon le premier aspect sont transposables directement au terminal. Par conséquent, ils ne sont pas détaillés plus amplement.

Selon un quatrième aspect, l'invention concerne un programme pour un module de sécurité, comprenant des instructions de code de programme destinées à commander l'exécution des étapes du procédé de téléchargement précédemment décrit mises en œuvre par le module de sécurité, lorsque ce programme est exécuté par ce module et un support d'enregistrement lisible par un module de sécurité sur lequel est enregistré un programme pour un module.

Les avantages énoncés pour le procédé de téléchargement selon le premier aspect sont transposables directement au programme pour un module de sécurité et au support d'enregistrement.

La technique de téléchargement d'un profil d'accès à un réseau de communication par un module de sécurité sera mieux comprise à l'aide de la description suivante de modes de réalisation particuliers, en référence aux dessins annexés sur lesquels :
- la figure 1 représente un environnement dans lequel est mis en œuvre le procédé de téléchargement dans un mode de réalisation particulier ;
- la figure 2a illustre des étapes d'un procédé de téléchargement d'un profil d'accès à un réseau de communication selon un mode particulier de réalisation ;
- la figure 2b illustre un autre exemple de mise en œuvre d'un établissement d'une session sécurisée de téléchargement ;
- la figure 3 représente un module de sécurité selon un mode particulier de réalisation.

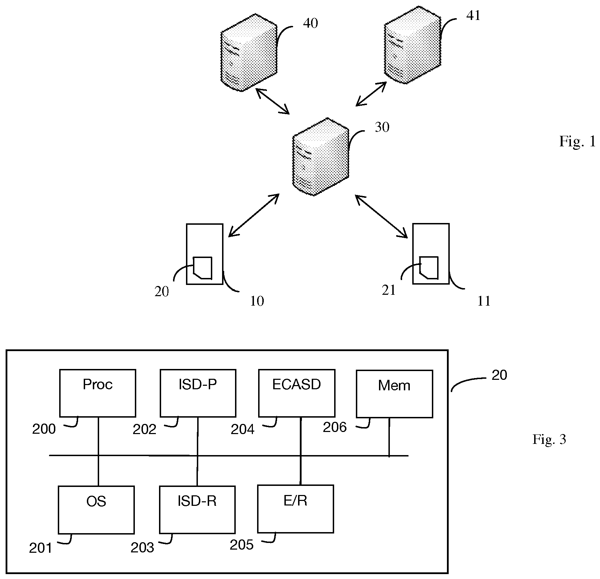

La **figure 1** représente un environnement dans lequel est mis en œuvre le procédé de téléchargement d'un profil d'accès à un réseau de communication par un module de sécurité dans un mode de réalisation particulier.

Dans la suite de la description, on présente des exemples de plusieurs modes de réalisation s'appliquant à un module de sécurité de type carte eUICC tel qu'en cours de normalisation dans le cadre de l'association GSMA, mais le procédé de téléchargement s'applique également à d'autres types de module de sécurité. Plus généralement, le module de sécurité est une plateforme dédiée inviolable, comprenant du matériel et du logiciel, apte à héberger de manière sécurisée des applications et leurs données confidentielles et cryptographiques et fournissant un environnement d'exécution d'applications sécurisé, par exemple une carte de type UICC.

La description qui suit se place dans le contexte des spécifications techniques, telles que définies par l'association GSMA. Plus précisément, l'architecture de la gestion de configuration à distance est définie dans la spécification technique « RSP Architecture », version 1.0, datée du 23 décembre 2015 et les procédures sont définies dans la spécification technique « SGP.22 - RSP Technical Spécification » v.1.1 datée du 9 juin 2016.

Un dispositif utilisateur 10, auquel un module de sécurité 20 est associé, est agencé pour accéder au réseau d'un opérateur mobile au moyen d'un profil d'accès au réseau généré par cet opérateur pour ce module de sécurité. Le dispositif utilisateur en association avec le module de sécurité forment un terminal mobile. Plus précisément, le profil d'accès est généré pour ce module de sécurité par un serveur de gestion de données de souscription, non représenté sur la figure 1, lié à l'opérateur. Le profil d'accès comprend une application d'accès au réseau et des données d'accès associées (on parle de « credentials » en anglais), telles que des clés cryptographiques et des algorithmes. Le profil d'accès permet notamment d'authentifier le terminal mobile, plus précisément le module de sécurité 20 lors d'un accès au réseau de l'opérateur. Un deuxième dispositif utilisateur 11 et son module de sécurité 21 associé sont également représentés sur la figure 1.

Le module de sécurité 20, 21 est typiquement une carte de type « eUICC » (de l'anglais « embedded Universal Integrated Circuit Card »), également appelée « eSIM » (de l'anglais « embedded Subscriber Identity Module »), ou carte SIM inamovible. Aucune limitation n'est attachée à ce type de carte. Dans un mode de réalisation particulier, le module de sécurité 20, 21 est une carte à puce avec un système d'exploitation offrant les fonctionnalités d'une carte de type eUICC. Dans un autre mode de réalisation particulier, le module de sécurité 20, 21 est intégré dans le terminal 10, 11 formant ainsi une seule entité.

Le module de sécurité 20, 21 mémorise un couple de clés : une clé privée SK.EUICC.ECDSA propre au module de sécurité 20,21, utilisée pour signer des données, et une clé publique PK.EUICC.ECDSA associée. Un certificat de clé publique CERT.EUICC.ECDSA, par exemple un certificat de type X509, a été émis pour certifier la clé publique PK.EUICC.ECDSA par un émetteur de certificat GSMA CI 40 (pour « Certificate Issuer ») ou par le fabricant de la carte EUM (pour « eUICC Manufacturer »). Dans ce dernier cas, le certificat du fabricant de la carte EUM est signé par l'émetteur de certificat GSMA CI 40. Cela permet au module de sécurité 20 d'être authentifié par toutes les entités reconnaissant l'émetteur de certificats 40.

Cet émetteur de certificat 40 est par exemple utilisé pour une première région. Un deuxième émetteur de certificat GSMA 41 est également représenté sur la figure 1. Cet émetteur de certification 41 est par exemple utilisé pour une deuxième région.

Sur la figure 1 est également représenté un serveur 30 apte à fournir par téléchargement à un module de sécurité un profil d'accès qui a été préparé pour lui. Ce serveur est chargé de la préparation des données de gestion de souscription SM-DP+ (pour « Subscription Manager Data Préparation »). Le rôle de ce serveur est de :
- préparer des dossiers de profil (« Profile Package » en anglais),
- mémoriser des clés de protection de profil de manière sécurisée et des dossiers de profil protégés dans une zone mémoire et
- allouer des dossiers de profil en fonction d'un identifiant de module de sécurité.

Le serveur 30 lie un dossier de profil protégé à un module de sécurité et télécharge, une fois une session sécurisée de téléchargement établie, ce ou ces profils d'accès liés à une application LPA (pour « Local Profile Assistant »). Cette application LPA peut selon les modes de réalisation être exécutée dans l'équipement utilisateur 10 ou dans le module de sécurité 20.

Dans le mode de réalisation décrit, le serveur 30 dispose de trois couples de clés : un premier dédié à l'établissement d'une connexion sécurisée TLS (pour « TLS Transport Layer Security ») avec le dispositif utilisateur, un deuxième dédié à l'authentification du serveur par le module de sécurité et le troisième dédié à la phase de téléchargement proprement dite.

Le premier couple de clés comprend une clé privée SK.DP.TLS propre au serveur 30 et une clé publique PK.DP.TLS associée. Un certificat de clé publique CERT.DP.TLS a été émis par l'émetteur de certificat 40 pour certifier la clé publique PK.DP.TLS.

Le deuxième couple de clés, dédié à la phase d'authentification, comprend une clé privée SK.DPauth.ECDSA propre au serveur 30, utilisée pour signer des données, et une clé publique PK.DPauth.ECDSA associée. Un certificat de clé publique CERT.DPauth.ECDSA a été émis par l'émetteur de certificat 40 pour certifier la clé publique PK.DPauth.ECDSA.

Le troisième couple de clés, dédié à la phase de téléchargement proprement dite, comprend une clé privée SK.DPpb.ECDSA propre au serveur 30, utilisée pour signer des données, et une clé publique PK.DPpb.ECDSA associée. Un certificat de clé publique CERT.DPpb.ECDSA a été émis par l'émetteur de certificat 40 pour certifier la clé publique PK.DPpb.ECDSA.

Il est ici souligné que dans un mode de réalisation particulier, le serveur 30 peut être chargé de la préparation des données de gestion de souscription pour différents opérateurs de réseau, dont l'un d'entre eux est rattaché à la première région, gérée par l'émetteur de certificat 40, et un autre est rattaché à la deuxième région, gérée par l'émetteur de certificat 41.

Dans ce cas, le serveur 30 mémorise pour chacun des émetteurs de certificat 40, 41, trois couples de clés.

La **figure 3** illustre de manière schématique un module de sécurité 20 dans un mode de réalisation particulier. Le module de sécurité 20 comprend notamment :
- un processeur 200 pour exécuter des instructions de code de modules logiciels ;
- une zone mémoire 206, agencée pour mémoriser une application qui comprend des instructions de code pour mettre en œuvre les étapes du procédé de téléchargement ;
- une mémoire de stockage, non représentée, agencée pour stocker des données utilisées lors de la mise en œuvre du procédé de téléchargement ;
- un sous-module de système d'exploitation 201 ;
- un sous-module ISD-P 202, agencé pour mémoriser un profil d'accès ;
- un sous-module ISD-R 203 ;
- un sous-module de contrôle de sécurité ECASD 204 ;
- un sous-module d'interface 205 avec le dispositif utilisateur (appelée ES10b).

Il est ici souligné que le module de sécurité 20 comprend également d'autres sous-modules de traitement, non représentés sur la figure 3, agencés pour mettre en œuvre les différentes fonctions de module de sécurité.

Le sous-module de contrôle de sécurité 204 ECASD (pour « Embedded UICC Controlling Authority Security Domain ») est agencé pour mémoriser de manière sécurisée des données d'authentification et pour fournir les services suivants aux sous-modules ISD-P 202 et ISD-R 203 : signer des données qui lui sont fournies au moyen de sa clé secrète SK.EUICC.ECDSA et vérifier des certificats à la demande de ces sous-modules avec une clé publique de l'émetteur de certificat PK.CI.ECDSA.

Les données d'authentification mémorisées dans le sous-module ECASD sont notamment les suivantes :
- la clé privée du module de sécurité SK.EUICC.ECDSA, le certificat de clé publique du module de sécurité CERT.EUICC.ECDSA, comprenant la clé publique PK.EUICC.ECDSA ;
- la clé publique de l'émetteur de certificat PK.CI.ECDSA.

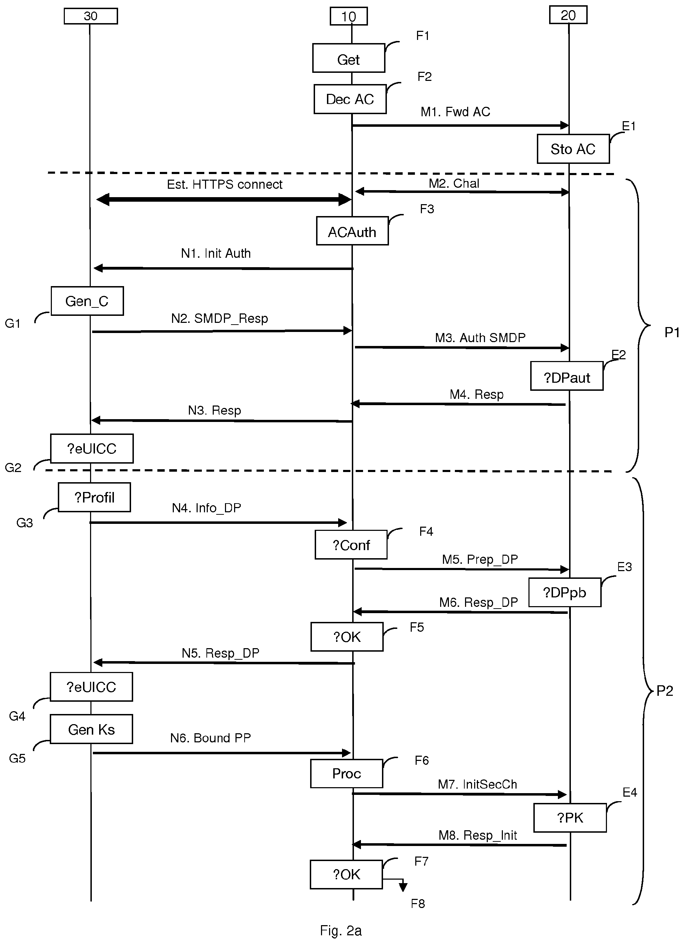

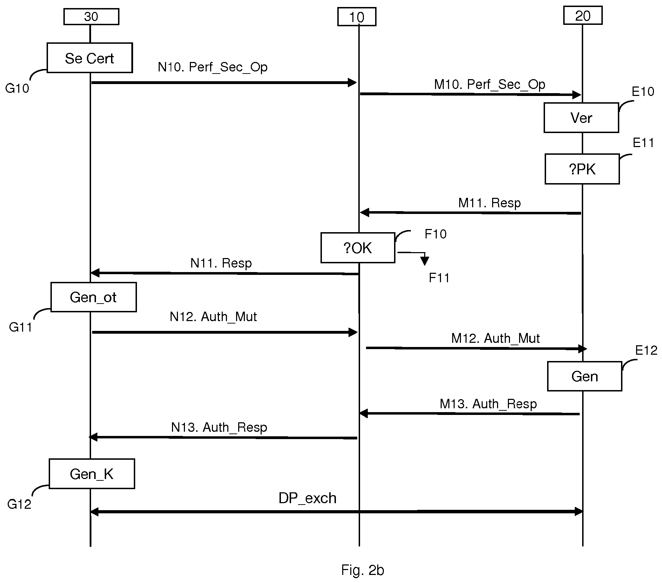

D'autres fonctions du sous-module de contrôle de sécurité ECASD 204 sont décrites par la suite en relation avec les figures 2a et 2b.

Le sous-module 202 ISD-P (pour « Issuer Security Domain Profile ») est agencé pour télécharger et installer un profil d'accès et pour l'héberger dans un conteneur sécurisé.

Le sous-module 203 ISD-R (pour « Issuer Security Domain Root ») est agencé pour créer un ou des sous-modules 202 ISD-P et pour gérer leurs cycles de vie.

D'autres fonctions du sous-module ISD-R 203 sont décrites par la suite en relation avec les figures 2a et 2b.

Le procédé de téléchargement d'un profil d'accès à un réseau de communication par le module de sécurité 20 va maintenant être décrit en relation avec la **figure 2a**.

La figure 2a illustre un mode de réalisation particulier où l'application LPA s'exécute dans l'équipement utilisateur 10. Lorsque l'application LPA s'exécute dans le module de sécurité 20, les messages notamment échangés sur l'interface ES10b deviennent des messages internes au module de sécurité 20.

A l'état initial, on suppose que l'utilisateur du dispositif utilisateur 10 et du module de sécurité 20 a souscrit à un abonnement auprès d'un opérateur de réseau de communication. En retour, il obtient un code d'activation AC (pour « Activation Code ») qui va lui permettre d'installer sur le module de sécurité 20 un profil d'accès au réseau dans un sous-module ISD-P 202. Une fois le profil d'accès installé, l'utilisateur peut accéder au réseau de communication et à des services fournis par l'opérateur du réseau dans le cadre de son contrat de souscription.

Tel que défini au paragraphe 4.1 de la spécification technique SG.22, un code d'activation AC correspond à une chaîne de caractères et comprend différents éléments d'information séparés par un caractère « $ ». Le code d'activation AC comprend notamment une adresse du serveur 30 à contacter pour obtenir le profil d'accès, un jeton d'accès au profil et un identifiant du serveur 30. Il est bien entendu que cette liste n'est pas exhaustive.

Dans le mode de réalisation particulier qui est décrit, le code d'activation AC comprend en outre une première donnée de vérification. Cette première donnée de vérification est préparée par l'opérateur de réseau et est destinée à permettre une vérification d'une authenticité de la clé publique de téléchargement PK.DPpb.ECSDA du serveur 30, dont l'adresse et l'identifiant sont fournis dans le code d'activation. Cette clé publique de téléchargement PK.DPpb.ECSDA du serveur 30 correspond à celle connue de, ou attendue par, l'opérateur de réseau pour le téléchargement du profil d'accès. Il s'agit par exemple du résultat de l'application d'une fonction à sens unique, telle qu'une fonction de hachage, à la clé publique de téléchargement. La fonction de hachage est par exemple la fonction SHA-2, SHA-256 ou SHA-3. Aucune limitation n'est attachée à ces exemples de fonctions de hachage. Dans un mode de réalisation particulier, seule une partie de ce résultat est fournie dans le code d'activation.

Par la suite, les échanges entre le dispositif utilisateur 10 et le module de sécurité 20 s'effectuent par l'intermédiaire du sous-module 205 d'interface.

Dans une étape F1, le dispositif utilisateur 10 obtient le code d'activation AC. Le code d'activation AC peut être saisi manuellement par l'utilisateur par l'intermédiaire d'une interface homme-machine du dispositif utilisateur 10. Il peut également être lu sous la forme d'un code-barres, d'un QR-code.

Dans une étape F2, le dispositif utilisateur 10 décode le code d'activation afin d'obtenir les données relatives au serveur 30 à contacter (adresse du serveur et identifiant de celui-ci SM-DP+ OID) ainsi que le jeton d'accès au profil (MatchingID). Toujours dans cette étape F2, le dispositif utilisateur 10 transmet au module de sécurité 20 dans un message M1 le code d'activation AC. Dans un mode de réalisation particulier, seule la première donnée de vérification est transmise. Dans le mode de réalisation particulier où l'application LPA s'exécute dans le module de sécurité 20, ce dernier obtient directement le code d'activation AC.

Le module de sécurité 20 obtient ou reçoit le code d'activation AC, ou la première donnée de vérification le cas échéant, dans une étape E1 et le mémorise par exemple dans le sous-module ISD-R 203.

Une phase P1 d'authentification mutuelle entre le serveur 30 et le module de sécurité 20 est alors exécutée.

Le dispositif utilisateur 10 obtient un challenge eUICC-Challenge dans un message M2 du module de sécurité 20.

Le dispositif utilisateur 10 établit une connexion sécurisée TLS avec le serveur 30. Pendant cette étape, le dispositif utilisateur 10 vérifie que le certificat CERT.DP.TLS est valide. La version 1.2 du protocole de sécurisation des échanges TLS (pour «Transport Layer Security ») telle que définie dans le document RFC 5246 de l'IETF est la version minimale à utiliser.

Dans une étape F3, le dispositif utilisateur 10 envoie un message N1 d'initialisation d'authentification (« ESDP.InitiateAuthentication ») au serveur 30. Ce message N1 comprend notamment le challenge eUICC-Challenge fourni par le module de sécurité 20.

Dans une étape G1, le serveur 30 effectue différentes vérifications, non détaillées ici, et génère un identifiant de transaction TransactionID, permettant d'identifier de manière unique la session de téléchargement, et un challenge SMDP-Challenge. Ces données générées, le challenge eUICC-Challenge et l'adresse du serveur 30 sont regroupées dans une structure de données, qui est signée par le serveur 30 au moyen de la clé privée d'authentification SK.DPauth.ECDSA. Le serveur 30 envoie alors un message N2 au dispositif utilisateur 10, ce message comprenant notamment l'identifiant de transaction TransactionID, la structure de données, la signature calculée et le certificat de clé publique d'authentification CERT.DPauth.ECDSA.

Le dispositif utilisateur 10 transmet le message reçu au module de sécurité 20 sous la forme d'un message M3 (« ES10b.AuthenticateServer ») demandant au module de sécurité 20 d'authentifier le serveur 30. Ce message M3 est reçu dans une étape E2 par le module de sécurité 20. Toujours dans cette étape E2, le module de sécurité 20 vérifie les données reçues, notamment le certificat CERT.DPauth.ECDSA, la signature au moyen de la clé PK.DPauth.ECDSA, génère une paire de clés ECKA à usage unique (otSK.EUICC.ECKA, otPK.EUICC.ECKA). Le module de sécurité 20 regroupe dans une structure de données notamment l'identifiant de transaction, le challenge SMDP-Challenge, la clé publique à usage unique générée otPK.EUICC.ECKA et signe cette structure de données au moyen de la clé secrète SK.EUICC.ECDSA. Le module de sécurité 20 envoie le message de réponse M4 au dispositif utilisateur 20, ce message M4 comprenant notamment la structure de données, la signature de celle-ci ainsi que le certificat CERT.UICC.ECDSA. Le dispositif utilisateur 10 transmet ces données au serveur 30 dans un message N3 de demande d'authentification (« ESDP.AuthenticateClient ») du module de sécurité par le serveur 30, qui les reçoit dans une étape G2.

Toujours dans cette étape G2, le serveur 30 vérifie notamment le certificat CERT.UICC.ECDSA et la signature reçue.

Une fois ces vérifications effectuées (certaines ne sont pas détaillées ici), la phase d'authentification mutuelle est terminée, la phase de téléchargement P2 du profil d'accès proprement dit peut démarrer.

Dans une étape G3, le serveur 30 vérifie si un ordre de téléchargement d'un profil est en attente pour le jeton d'accès fourni MatchingID. On considère que tel est le cas et que les vérifications effectuées par le serveur 30 sont positives. Le serveur 30 génère alors une structure de données comprenant notamment l'identifiant de transaction TransactionID, les métadonnées de profil correspondant au profil identifié par le jeton d'accès et signe cette structure de données au moyen de la clé privée SK.DPpb.ECDSA. Toujours dans cette étape G3, le serveur 30 envoie dans un message N4 l'identifiant de transaction, la structure de données, la signature et le certificat de clé publique CERT.DPpb.ECDSA.

Ce message N4 est reçu par le dispositif utilisateur 10 dans une étape F4. Le dispositif utilisateur 10 peut le cas échéant demander à l'utilisateur une confirmation du téléchargement du profil d'accès, en affichant le nom du profil d'accès par exemple, par l'intermédiaire de l'interface homme-machine. Le dispositif utilisateur 10 envoie ensuite au module de sécurité 20 une demande M5 de préparation du téléchargement (« ESlOb.PrepareDownload »). Cette demande M5 comprend la structure de données reçue, la signature de celle-ci et le certificat de clé publique de téléchargement du serveur CERT.DPpb.ECDSA.

Cette demande M5 est reçue par le module de sécurité 20 dans une étape E3. Toujours dans cette étape E3, le module de sécurité 20 vérifie :
- le certificat CERT.DPpb.ECDSA reçu,
- que les certificats CERT.DPauth.ECDSA et CERT.DPpb.ECDSA ont bien le même propriétaire,
- la signature reçue,
- la structure de données reçue.

Puis, le module de sécurité 20 génère une structure de données comprenant notamment l'identifiant de transaction, et signe la structure de données au moyen de la clé privée SK.EUICC.ECDSA. Le module de sécurité 20 mémorise également la clé publique de téléchargement du serveur 30 PK.DPpb.ECDSA par exemple dans le sous-module ISD-R 203.

Toujours dans cette étape E3, le module de sécurité 20 envoie au dispositif utilisateur 10 un message de réponse M6, comprenant notamment la structure de données et la signature de celle-ci.

Dans une étape F5, le dispositif utilisateur 10 vérifie le message reçu et transmet au serveur 30 un message N5 de réponse (« ES9+.GetBoundProfilePackage »), ce message N5 comprenant les données reçues dans le message M6.

Le message M6 est reçu par le serveur 30 dans une étape G4. Toujours dans cette étape G4, le serveur 30 vérifie la signature reçue au moyen de la clé publique PK.EUICC.ECDSA et la structure de données reçue.

Les étapes qui suivent permettent un établissement d'une session sécurisée de téléchargement. Lors de cet établissement, des clés de session sont générées de manière conjointe entre le serveur et le module de sécurité et le serveur est authentifié par le module de sécurité au moyen de la clé publique de téléchargement PK.DPpb.ECDSA.

Dans une étape G5, le serveur 30 génère un couple de clés (otPK.DP.ECKA, otSK.DP.ECKA) à usage unique pour un accord de clés de session, des clés de session et un dossier de profil lié. La clé publique à usage unique otPK.DP.ECDSA et éventuellement d'autres données, sont signées par le serveur 30 avec sa clé privée SK.DPpb.ECDSA pour authentifier le serveur durant l'accord de clés de session.

Le serveur 30 envoie ensuite au dispositif utilisateur 10 dans un message N6 l'identifiant de transaction et le dossier de profil lié.

Le message N6 est reçu dans une étape F6 par le dispositif utilisateur 10. Le dispositif utilisateur 10 transfère un appel M7 à la fonction « ES8+.InitialiseSecureChannel » comprise dans le dossier de profil lié au module de sécurité 20 en appelant de manière répétée la fonction « E10b.LoadBoundProfilePackage ». Cette fonction « ES8+.InitialiseSecureChannel » demande une ouverture de session sécurisée de téléchargement au module de sécurité. Les données d'entrée de la fonction « ES8+.InitialiseSecureChannel » comprennent notamment la clé publique à usage unique otPK.DP.ECKA pour un accord de clés de sessions et une signature des données de cette fonction au moyen de la clé privée SK.DPpb.ECDSA de téléchargement du serveur. Cette signature de données permet d'authentifier le serveur 30 lors de l'établissement de la session sécurisée de téléchargement. Dans ce mode de réalisation, les clés de session sont générées, par exemple, à partir d'un accord de clé entre le serveur et le module de sécurité. C'est un accord de clé authentifié où les clés privées des deux entités sont utilisées pour fournir l'authentification lors de la génération des clés de session.

Cette demande M7 est reçue par le module de sécurité 20 dans une étape E4. Toujours dans cette étape E4, le module de sécurité 20 vérifie la signature des données, notamment de la clé publique à usage unique otPK.DP.ECDSA pour un accord de clés de session, au moyen de la clé publique de téléchargement PK.DPpb.ECDSA. Dans le mode de réalisation qui est décrit ici, le module de sécurité 20 vérifie également l'authenticité de la clé publique de téléchargement PK.DPpb.ECDSA du serveur 30 au moyen de la première donnée de vérification. Cette vérification de l'authenticité de la clé publique de téléchargement PK.DPpb.ECDSA peut être effectuée indifféremment avant ou après la vérification de la signature reçue dans la demande M7. On rappelle ici que la première donnée de vérification a été fournie par l'opérateur de réseau dans le code d'activation ou en association avec celui-ci. Le certificat de clé publique de téléchargement CERT.DPpb.ECDSA a quant à lui été fourni par le serveur 30 lui-même. Une clé publique de téléchargement vérifiée authentique signifie que le serveur 30 a bien utilisé la clé secrète associée à la clé publique dédiée à la phase de téléchargement pour signer des données et qui correspond à un accord avec cet opérateur de réseau. Plus précisément, la clé secrète utilisée pour signer des données doit correspondre à celle connue de, ou attendue par, l'opérateur de réseau lors de la préparation de la première donnée de vérification. Cette vérification est particulièrement importante puisqu'ensuite des clés de session sont générées par le module de sécurité 20 à partir des données reçues dans la demande M7 et que le téléchargement du profil d'accès va s'effectuer. Une utilisation d'autres couples de clés par le serveur 30 peut compromettre la sécurité du téléchargement proprement dit. A titre de premier exemple, ceci peut être le cas lorsque le contrôle du serveur 30 a été pris par des attaquants pour télécharger des faux profils d'accès. Dans un deuxième exemple, le serveur 30 peut utiliser un couple de clés qui a été certifié par un émetteur de certificats, par exemple l'émetteur de certificats 41, autre que celui choisi par l'opérateur de réseau, l'émetteur de certificats 40. Ce couple de clés est susceptible de ne pas présenter le niveau de sécurité requis par l'opérateur.

Par ailleurs, dans le mode de réalisation décrit, le serveur 30 dispose trois certificats, respectivement destinés à être utilisés pour la sécurisation des échanges entre le serveur et le dispositif utilisateur CERT.DP.TLS, pour l'authentification du serveur par le module de sécurité CERT.DPauth.ECDSA, pour le téléchargement du profil d'accès CERT.DPpb.ECDSA. La vérification de l'authenticité de la clé publique de téléchargement permet de garantir que le serveur 30 n'utilise pas un certificat autre que celui dédié au téléchargement pour télécharger le profil d'accès. Ceci permet également à l'opérateur d'avoir une garantie quant au niveau de sécurité utilisé pour le téléchargement du profil d'accès.

Lorsque la clé publique de téléchargement n'est pas vérifiée authentique, le module de sécurité 20 interrompt l'établissement de la session sécurisée de téléchargement. Plus précisément, le module de sécurité 20 envoie au dispositif utilisateur 10 un message d'erreur.

Lorsque la clé publique de téléchargement est vérifiée authentique, le module de sécurité 20 génère des clés de session, qui vont être utilisées lors du téléchargement du profil d'accès dans le module de sécurité, en fonction des données reçues dans la demande M7. Dans ce cas, le module de sécurité 20 envoie un message M8 de réponse au dispositif utilisateur 10, permettant de continuer le téléchargement du profil d'accès proprement dit.

Dans une étape F7, le dispositif utilisateur 10 reçoit le message de réponse M8 en provenance du module de sécurité. Lorsque le message de réponse est un message d'erreur, dans une étape F8, le dispositif utilisateur 10 interrompt le téléchargement du profil d'accès. Le serveur 30 est notifié de l'erreur et un message est affiché à destination de l'utilisateur au moyen de l'interface homme-machine du dispositif utilisateur 10. Dans le cas contraire, le téléchargement du profil d'accès se poursuit par échanges successifs entre le dispositif utilisateur 10 et le module de sécurité 20 sur la session sécurisée de téléchargement établie.

On constate ainsi que le téléchargement du profil d'accès n'a pas lieu lorsque la clé publique de téléchargement, et donc la clé secrète de téléchargement, ne correspondaient pas à celles ayant été définies par l'opérateur de réseau pour lequel un profil d'accès devait être téléchargé.

Dans une première variante, la vérification de l'authenticité de la clé publique de téléchargement est effectuée lors de l'étape E3. On rappelle que cette étape E3 fait suite à la phase d'authentification mutuelle et est préalable à la réception E4 de la demande d'ouverture de session sécurisée de téléchargement. Cette étape E3 fait suite à la réception d'une demande M5 de préparation du téléchargement par le module de sécurité 20. On rappelle ici que cette demande M5 comprend une structure de données (comprenant l'identifiant de transaction et les métadonnées de profil d'accès correspondant au profil identifié), la signature de celle-ci et le certificat de clé publique de téléchargement du serveur CERT.DPpb.ECDSA. Tel que décrit précédemment, dans cette étape E3, le module de sécurité 20 vérifie notamment le certificat CERT.DPpb.ECDSA reçu et si le même identifiant est bien associé aux certificats CERT.DPauth.ECDSA et CERT.DPpb.ECDSA. Dans cette première variante, le module de sécurité 20 vérifie en outre l'authenticité de la clé publique de téléchargement du serveur au moyen de la première donnée de vérification. Lorsque la clé publique de téléchargement n'est pas vérifiée authentique, le module de sécurité 20 interrompt l'établissement de la session sécurisée de téléchargement en envoyant au dispositif utilisateur 10 un message d'erreur, ce message d'erreur entraînant une interruption du téléchargement du profil d'accès par le dispositif utilisateur. Cette vérification permet, en complément des avantages décrits précédemment, de détecter plus tôt dans les échanges que le serveur 30 n'utilise pas la clé publique de téléchargement prévue par l'opérateur de réseau. On mentionne également qu'un serveur 30 malicieux pourrait utiliser à cette étape le certificat de clé publique de téléchargement conforme aux attentes de l'opérateur de réseau mais utiliser lors de l'étape G5 de génération des clés à usage unique un certificat de clé publique qui ne corresponde pas à celui attendu par l'opérateur de réseau. Les deux vérifications d'authenticité sont ainsi complémentaires.

Dans une deuxième variante, cumulative ou alternative à la première variante, le code d'activation AC obtenu par le dispositif utilisateur 10 comprend en outre une deuxième donnée de vérification. Cette deuxième donnée de vérification permet de vérifier que la clé publique d'authentification PK.DPauth.ECDSA est authentique et correspond à celle attendue par l'opérateur de réseau. Il s'agit par exemple du résultat de l'application d'une fonction à sens unique, telle qu'une fonction de hachage, à la clé publique d'authentification. La fonction de hachage est par exemple la fonction SHA-2, SHA-256 ou SHA-3. Aucune limitation n'est attachée à ces exemples de fonctions de hachage. Dans un mode de réalisation particulier, seule une partie de ce résultat est fournie dans le code d'activation.

Un premier exemple de mise en œuvre de cette deuxième variante est décrit, dans lequel l'utilisation de la deuxième donnée de vérification s'effectue lors de la phase d'authentification mutuelle.

A l'étape E1, le module de sécurité 20 reçoit le code d'activation AC, ou les première et deuxième données de vérification le cas échéant, et les mémorisent dans le module de sécurité 20 par exemple dans le sous-module ISD-R 203.

La phase P1 d'authentification mutuelle entre le serveur 30 et le module de sécurité 20 est alors exécutée. Le dispositif utilisateur 10 obtient un challenge eUICC-Challenge dans un message M2 du module de sécurité 20. Le dispositif utilisateur 10 établit une connexion sécurisée TLS avec le serveur 30. Pendant cette étape, le dispositif utilisateur 10 vérifie que le certificat CERT.DP.TLS est valide. Dans une étape F3, le dispositif utilisateur 10 envoie un message N1 d'initialisation d'authentification au serveur 30. Ce message N1 comprend notamment le challenge eUICC-Challenge fourni par le module de sécurité 20. Dans une étape G1, le serveur 30 effectue différentes vérifications et génère un identifiant de transaction TransactionID permettant d'identifier de manière unique la session de téléchargement et un challenge SMDP-Challenge. Une fois ces données générées, le challenge eUICC-Challenge et l'adresse du serveur 30 sont regroupées dans une structure de données, qui est signée par le serveur 30 au moyen de la clé privée d'authentification SK.DPauth.ECDSA. Le serveur 30 envoie alors un message N2 au dispositif utilisateur 10, ce message comprenant notamment l'identifiant de transaction, la structure de données, la signature calculée et le certificat de clé publique d'authentification CERT.DPauth.ECDSA. Le dispositif utilisateur 10 transmet le message reçu au module de sécurité 20 sous la forme d'un message M3 demandant d'authentifier le serveur 30. Ce message M3 est reçu dans une étape E2 par le module de sécurité 20.

Toujours dans cette étape E2, le module de sécurité 20 vérifie les données reçues, notamment le certificat CERT.DPauth.ECDSA, la signature au moyen de la clé PK.DPauth.ECDSA et génère une paire de clé à usage unique.

Dans cette deuxième variante, le module de sécurité 20 vérifie que la clé publique d'authentification du serveur PK.DPauth.ECDSA est authentique au moyen de la deuxième donnée de vérification. Cette deuxième donnée de vérification permet ainsi de vérifier que la clé publique d'authentification PK.DPauth.ECDSA est authentique et correspond à celle attendue par l'opérateur de réseau. Lorsque la clé publique d'authentification n'est pas vérifiée authentique, le module de sécurité 20 interrompt le téléchargement du profil d'accès en envoyant au dispositif utilisateur 10. Ce message d'erreur entraîne une interruption du téléchargement du profil d'accès par le dispositif utilisateur. Lorsque la clé publique d'authentification est vérifiée authentique, la phase d'authentification mutuelle se poursuit comme décrit précédemment.

Un deuxième exemple de mise en œuvre de cette deuxième variante est décrit, dans lequel l'utilisation de la deuxième donnée de vérification s'effectue lors de la phase de téléchargement P2. Plus précisément, la vérification que la clé publique d'authentification est authentique au moyen de la deuxième donnée de vérification est effectuée lors de l'étape E4, avant ou après la vérification que la clé publique de téléchargement est authentique au moyen de la première donnée de vérification.

Dans une troisième variante, cumulative ou alternative à la première ou à la deuxième variante, le code d'activation AC obtenu par le dispositif utilisateur 10 comprend en outre une troisième donnée de vérification. Cette troisième donnée de vérification permet de vérifier que la clé publique TLS PK.DP.TLS est authentique et correspond à celle attendue par l'opérateur de réseau. Il s'agit par exemple du résultat de l'application d'une fonction à sens unique, telle qu'une fonction de hachage, à la clé publique d'authentification. La fonction de hachage est par exemple la fonction SHA-2, SHA-256 ou SHA-3. Aucune limitation n'est attachée à ces exemples de fonctions de hachage. Dans un mode de réalisation particulier, seule une partie de ce résultat est fournie dans le code d'activation.

On rappelle que, lors de l'établissement de la connexion sécurisée TLS avec le serveur 30, le dispositif utilisateur 10 vérifie que le certificat CERT.DP.TLS est valide. Dans cette troisième variante, le dispositif utilisateur 10 vérifie en outre l'authenticité de la clé publique TLS PK.DP.TLS au moyen de la troisième donnée de vérification. Cette troisième donnée de vérification permet ainsi de vérifier que la clé publique TLS PK.DP.TLS est authentique et correspond à celle attendue par l'opérateur de réseau. Lorsque la clé publique PK.DP.TLS n'est pas vérifiée authentique, le dispositif utilisateur 10 interrompt le téléchargement du profil d'accès et un message d'erreur est envoyé au serveur 30. Lorsque la clé publique PK.DP.TLS est vérifiée authentique, la phase d'authentification mutuelle se poursuit comme décrit précédemment. Il est également envisageable d'effectuer cette vérification de la clé publique PK.DP.TLS lors de l'étape E4.

La description a été faite dans un cas particulier où trois certificats de clé publique différents sont utilisés pour la mise en œuvre du procédé de téléchargement. Les modes de réalisation et leurs variantes décrits sont transposables par l'homme du métier à un mode de réalisation dans lequel un seul certificat de clé publique (et donc un seul couple de clés, secrète et publique) est utilisé pour l'ensemble des échanges (connexion sécurisée, authentification, téléchargement proprement dit).

La description a également été faite dans un mode de réalisation où une phase d'authentification mutuelle entre le serveur 30 et le module de sécurité 20 est mise en œuvre. Il est bien entendu qu'il est également possible de mettre en œuvre le procédé de téléchargement avec uniquement une authentification du serveur par le module de sécurité, voire sans authentification.

La description a été faite dans un mode de réalisation comprenant un établissement de session sécurisée de téléchargement au cours duquel des clés de session sont générées de manière conjointe entre le serveur 30 et le module de sécurité 20 et dans lequel le serveur est authentifié par le module de sécurité au moyen d'une clé publique de téléchargement. Plus précisément, l'établissement de la session sécurisée de téléchargement est déclenché par une réception par le module de sécurité d'une demande d'ouverture de session sécurisée de téléchargement, cette demande comprenant une clé publique à usage unique pour un accord de clés de sessions générée par le serveur et une signature des données de cette demande au moyen d'une clé privée de téléchargement du serveur à laquelle est associée la clé publique de téléchargement. La vérification de l'authenticité de la clé publique de téléchargement est effectuée au moyen de la première donnée de vérification.

La **figure 2b** illustre un autre exemple de mise en œuvre d'un établissement d'une session sécurisée. Cet autre exemple est défini dans la spécification technique « GlobalPlatform Card- Secure Channel Protocol '11'- Card Specification v2.2 - Amendment F » version 1.0, publiée par l'organisme GlobalPlatform. La figure 2b correspond à l'établissement d'une session sécurisée représenté à la figure 4-2 (SCP11a Protocol Overview) de cette spécification. Le serveur 30 correspond à une entité OCE (pour « Off Card Entity »). Son certificat de clé publique de téléchargement est noté par la suite CERT.DP.ECKA. Le serveur 30 dispose d'un couple de clés comprenant une clé privée SK.DP.ECKA propre au serveur 30 et une clé publique PK.DP.ECKA associée. Le certificat de clé publique CERT.DP.ECKA a été émis par l'émetteur de certificat 40 pour certifier la clé publique PK.DP.ECKA.

Le module de sécurité 20 correspond à un dispositif SD (pour « Secure Device »). Il dispose d'un couple de clés : une clé privée SK.EUICC.ECKA et une clé publique PK.EUICC.ECKA associée. Le certificat de clé publique est noté CERT.EUICC.ECKA.

Dans une étape G10, le serveur 30 envoie à destination de module de sécurité 20 son certificat CERT.DP.ECKA signé par l'émetteur de certificats 40 dans une demande N10 d'exécution d'une opération de sécurité (« Perform Security Opération »). Cette demande comprend dans le certificat la clé publique de téléchargement PK.DP.ECKA destinée à contribuer à la génération des clés de session. La fourniture du certificat permet d'authentifier le serveur 30 lors de l'établissement de la session sécurisée. Ce message N10 transite via le dispositif utilisateur 10 et est retransmis sous la forme d'un message M10 au module de sécurité.

Dans une étape E10, le module de sécurité 20 vérifie le certificat CERT.DP.ECKA. Si cette vérification est positive, dans une étape E11, le module de sécurité 20 extrait la clé publique du certificat PK.DP.ECKA et vérifie si celle-ci est authentique au moyen de la première donnée de vérification. Si tel n'est pas le cas, le module de sécurité 20 interrompt l'établissement de la session sécurisée de téléchargement et envoie un message d'erreur au dispositif utilisateur 10, ce message d'erreur entraînant une interruption du téléchargement du profil d'accès par le dispositif utilisateur. Si tel est le cas, le serveur 30 ayant bien utilisé la clé publique de téléchargement requise par l'opérateur de réseau, le module de sécurité 20 envoie au dispositif utilisateur 10 un message M11 de réponse à la demande d'exécution d'une opération de sécurité. Les étapes F10 et F11 sont respectivement similaires aux étapes F7 et F8 décrites précédemment.

L'établissement de la session sécurisée se poursuit par une étape G11 au cours de laquelle le serveur 30 génère un couple de clés à usage unique (eSK.DP.ECKA, ePK.DP.ECKA) et envoie la clé publique à usage unique ePK.DP.ECKA dans un message N12 d'authentification mutuelle (« Mutual Authenticate ») au dispositif utilisateur 10, qui le relaie dans un message M12 au module de sécurité 20.

Dans une étape E12, le module de sécurité 20 génère un couple de clés à usage unique (eSK.EUICC.ECKA, ePK.EUICC.ECKA) et calcule une première valeur ShSs à partir de PK.DP.ECKA et SK.EUICC.ECKA, puis une deuxième valeur ShSe à partir de ePK.DP.ECKA et eSK.EUICC.ECKA. Le module de sécurité 20 dérive ensuite des clés de session, par exemple des clés de session AES (pour « Advanced Encryption Standard »), à partir des première et deuxième valeurs. On constate ici que la clé publique de téléchargement PK.DP.ECKA est utilisée pour calculer les clés de session. La vérification de l'authenticité de celle-ci à l'étape E11 permet de sécuriser le calcul des clés de session. Le module de sécurité 20 calcule également un reçu.

Le module de sécurité 20 envoie au dispositif utilisateur 10 dans un message M13 une réponse d'authentification comprenant la clé publique à sens unique générée ePK.EUICC.ECKA et le reçu. Le dispositif utilisateur 10 relaie le message M13 sous la forme d'un message N13 au serveur 30.

Le serveur 30 reçoit le message M13 dans une étape G12 et calcule une première valeur ShSs à partir de PK.eUICC.ECKA et SK.DP.ECKA, puis une deuxième valeur ShSe à partir de ePK.eUICC.ECKA et eSK.DP.ECKA. Le module de sécurité 20 dérive ensuite des clés de session, par exemple AES, à partir des première et deuxième valeurs. Puis il vérifie le reçu.

Le profil d'accès peut alors être téléchargé vers le module de sécurité au moyen de la session sécurisée de téléchargement.

On rappelle ici que ces différents modes de réalisation ont été décrits en distinguant le dispositif utilisateur 10 du module de sécurité 20. Dans d'autres modes de réalisation, qui se déduisent naturellement de cette description, le dispositif utilisateur 10 et le module de sécurité 20 forment une seule entité.

Aucune limitation n'est attachée à ces différents modes de réalisation et l'homme du métier est à même d'en définir d'autres en combinant lors d'un téléchargement d'un profil d'accès à un réseau une vérification de l'authenticité d'une clé publique d'un serveur au moyen d'une donnée de vérification fournie par un opérateur du réseau et une interruption du téléchargement du profil d'accès lorsque la clé publique n'est pas vérifiée authentique.

Ainsi, pour la mise en œuvre du procédé de téléchargement, dans un mode de réalisation particulier, le module de sécurité 20, 21 destiné à être associé à un dispositif utilisateur 10, 11 comprend :
- un sous-module d'émission/réception, agencé pour communiquer avec le dispositif utilisateur, pour obtenir une première donnée de vérification préparée par un opérateur de réseau et obtenue par le dispositif utilisateur ;
- un sous-module de contrôle, agencé pour établir une session sécurisée de téléchargement, au cours duquel des clés de session sont générées de manière conjointe entre un serveur, auprès duquel un profil d'accès préparé par ledit opérateur de réseau est disponible pour téléchargement, et le module de sécurité et dans lequel le serveur est authentifié par le module de sécurité au moyen d'une clé publique de téléchargement, pour vérifier l'authenticité de la clé publique de téléchargement du serveur au moyen de la première donnée de vérification et pour déclencher une interruption du téléchargement du profil d'accès par le dispositif utilisateur en envoyant un message d'erreur lorsque la clé publique de téléchargement n'est pas vérifiée authentique.

La vérification de l'authenticité de la clé publique de téléchargement permet au sous-module de contrôle de vérifier que le serveur utilise une clé secrète de téléchargement correspondant à celle prévue par l'opérateur de réseau lors de la préparation de la première donnée de vérification.

Dans un mode de réalisation particulier, le sous-module de contrôle est également agencé pour vérifier l'authenticité d'une clé publique d'authentification du serveur au moyen de la deuxième donnée d'authentification et pour déclencher une interruption du téléchargement du profil d'accès par l'envoi d'un message d'erreur au dispositif utilisateur.

La vérification de l'authenticité de la clé publique d'authentification permet au sous-module de contrôle de vérifier que le serveur utilise une clé secrète d'authentification correspondant à celle prévue par l'opérateur de réseau lors de la préparation de la deuxième donnée de vérification.

Dans un mode de réalisation particulier, le sous-module de contrôle est également agencé pour vérifier l'authenticité d'une clé publique utilisée dans une connexion sécurisée TLS du serveur au moyen de la troisième donnée d'authentification et pour déclencher une interruption du téléchargement du profil d'accès par l'envoi d'un message d'erreur au dispositif utilisateur lorsque la clé publique PK.DP.TLS n'est pas vérifiée authentique.

La vérification de l'authenticité de la clé publique utilisée dans une connexion sécurisée TLS permet au sous-module de contrôle de vérifier que le serveur utilise une clé secrète dans une connexion sécurisée TLS correspondant à celle prévue par l'opérateur de réseau lors de la préparation de la troisième donnée de vérification.

Différents sous-modules peuvent jouer le rôle de ce sous-module de contrôle. Le sous-module ISD-R 203 peut par exemple interagir avec le sous module ECASD pour commander à ce dernier une vérification de l'authenticité des clés publiques de téléchargement, d'authentification et de connexion sécurisée TLS en fonction respectivement des première, deuxième et troisième données de vérification. Dans un autre exemple de réalisation, le sous-module ISD-R peut également mettre en œuvre ces vérifications lui-même.

Dans un mode de réalisation particulier, le terminal mobile est formé d'un dispositif utilisateur 10, agencé pour communiquer avec un serveur auprès duquel un profil d'accès préparé par un opérateur de réseau est disponible pour téléchargement, et d'un module de sécurité 20 tel que décrit précédemment.

Dans un mode de réalisation particulier, comme décrit précédemment, le module de sécurité peut être intégré dans le terminal. Ainsi, le terminal mobile est agencé pour communiquer avec un serveur auprès duquel un profil d'accès préparé par un opérateur de réseau est disponible pour téléchargement et comprend :
- un module d'obtention d'une première donnée de vérification préparée par ledit opérateur de réseau ;
- un module de contrôle, agencé pour établir une session sécurisée de téléchargement, au cours de laquelle des clés de session sont générées de manière conjointe entre le serveur et le terminal et dans lequel le serveur est authentifié par le terminal au moyen d'une clé publique de téléchargement, pour vérifier l'authenticité d'une clé publique de téléchargement du serveur au moyen de la première donnée de vérification et pour déclencher une interruption du téléchargement du profil d'accès par l'envoi d'un message d'erreur lorsque la clé publique de téléchargement n'est pas vérifiée authentique.

La vérification de l'authenticité de la clé publique de téléchargement permet au module de contrôle de vérifier que le serveur utilise une clé secrète de téléchargement correspondant à celle prévue par l'opérateur de réseau lors de la préparation de la première donnée de vérification.

Les modes de réalisation particuliers décrits précédemment pour le module de sécurité sont également applicables au terminal.

La technique de téléchargement d'un profil d'accès est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les sous-modules 202, 203, 204 sont agencés pour mettre en œuvre le procédé de téléchargement précédemment décrit. Il s'agit de préférence de modules logiciels comprenant des instructions logicielles pour faire exécuter celles des étapes du procédé de téléchargement précédemment décrit, mises en œuvre par un module de sécurité. L'invention concerne donc aussi :
- un programme pour un module de sécurité, comprenant des instructions de code de programme destinées à commander l'exécution des étapes du procédé de téléchargement précédemment décrit, lorsque ledit programme est exécuté par ce module de sécurité ;
- un support d'enregistrement lisible par un module de sécurité sur lequel est enregistré le programme pour un module.

L'invention concerne donc aussi :
- un programme pour un terminal, comprenant des instructions de code de programme destinées à commander l'exécution des étapes du procédé de téléchargement précédemment décrit, lorsque ledit programme est exécuté par ce terminal ;
- un support d'enregistrement lisible par un terminal sur lequel est enregistré le programme pour un terminal.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de téléchargement d'un profil d'accès à un réseau de communication par un module de sécurité (20, 21), ledit profil d'accès étant préparé pour un utilisateur par un opérateur de réseau et disponible auprès d'un serveur (30) configuré pour fournir par téléchargement au module de sécurité ledit profil d'accès, ledit procédé comprenant :
- une obtention (E1) par le module de sécurité d'une première donnée de vérification préparée par ledit opérateur de réseau ;
- un établissement d'une session sécurisée de téléchargement, au cours duquel des clés de session sont générées de manière conjointe entre le serveur et le module de sécurité et dans lequel le serveur est authentifié par le module de sécurité au moyen d'une clé publique de téléchargement ;
- une vérification (E4) par le module de sécurité de l'authenticité de la clé publique de téléchargement du serveur au moyen de la première donnée de vérification permettant de vérifier que le serveur utilise une clé secrète de téléchargement correspondant à celle prévue par l'opérateur de réseau lors de la préparation de la première donnée de vérification ;
- lorsque la clé publique de téléchargement n'est pas vérifiée authentique, une interruption du téléchargement du profil d'accès.

2. Procédé de téléchargement selon la revendication 1, dans lequel l'établissement de la session sécurisée de téléchargement est déclenché par une réception par le module de sécurité d'une demande (M7) d'ouverture de session sécurisée de téléchargement, ladite demande comprenant une clé publique à usage unique pour un accord de clés de sessions générée par le serveur et une signature des données de ladite demande au moyen d'une clé privée de téléchargement du serveur à laquelle est associée la clé publique de téléchargement.

3. Procédé de téléchargement selon la revendication 2, dans lequel la vérification de l'authenticité est effectuée lors d'une réception (E3) par le module de sécurité d'une demande de préparation du téléchargement, ladite demande comprenant un certificat de clé publique de téléchargement du serveur, préalablement à la réception de la demande d'ouverture de session sécurisée de téléchargement.

4. Procédé de téléchargement selon la revendication 2, dans lequel le module de sécurité obtient en outre une deuxième donnée de vérification, vérifie au moyen de la deuxième donnée de vérification une clé publique d'authentification du serveur, reçue pendant une phase d'authentification du serveur par le module de sécurité, et lorsque la clé publique d'authentification n'est pas vérifiée authentique, interrompt le téléchargement du profil d'accès.

5. Procédé de téléchargement selon la revendication 4, dans lequel la vérification de l'authenticité de la clé publique d'authentification est effectuée lors de la phase d'authentification du serveur par le module de sécurité.

6. Procédé de téléchargement selon la revendication 4, dans lequel la vérification de l'authenticité de la clé publique d'authentification est déclenchée suite à la réception de la demande d'ouverture de session sécurisée de téléchargement.

7. Procédé de téléchargement selon la revendication 1, dans lequel l'établissement de la session sécurisée de téléchargement est déclenché par une réception par le module de sécurité d'une demande (N10) d'exécution d'une opération de sécurité, ladite demande comprenant la clé publique de téléchargement destinée à contribuer à la génération des clés de session.

8. Module de sécurité (20, 21) comprenant :
- un sous-module d'émission/réception, agencé pour obtenir une première donnée de vérification préparée par un opérateur de réseau ;
- un sous-module de contrôle, agencé pour établir une session sécurisée de téléchargement, au cours duquel des clés de session sont générées de manière conjointe entre un serveur, auprès duquel un profil d'accès préparé par ledit opérateur de réseau est disponible pour téléchargement, et le module de sécurité et dans lequel le serveur est authentifié par le module de sécurité au moyen d'une clé publique de téléchargement, pour vérifier l'authenticité de la clé publique de téléchargement du serveur au moyen de la première donnée de vérification permettant de vérifier que le serveur utilise une clé secrète de téléchargement correspondant à celle prévue par l'opérateur de réseau lors de la préparation de la première donnée de vérification et pour déclencher une interruption du téléchargement du profil d'accès lorsque la clé publique de téléchargement n'est pas vérifiée authentique.

9. Terminal mobile, agencé pour communiquer avec un serveur auprès duquel un profil d'accès préparé par un opérateur de réseau est disponible pour téléchargement, ledit terminal mobile comprenant - un module de sécurité (20,21);
- un module d'obtention d'une première donnée de vérification préparée par ledit opérateur de réseau ;
- un module de contrôle, agencé pour établir une session sécurisée de téléchargement, au cours de laquelle des clés de session sont générées de manière conjointe entre le serveur et le module de sécurité et dans lequel le serveur est authentifié par le module de sécurité au moyen d'une clé publique de téléchargement, pour vérifier l'authenticité d'une clé publique de téléchargement du serveur au moyen de la première donnée de vérification permettant de vérifier que le serveur utilise une clé secrète de téléchargement correspondant à celle prévue par l'opérateur de réseau lors de la préparation de la première donnée de vérification et pour déclencher une interruption du téléchargement du profil d'accès lorsque la clé publique de téléchargement n'est pas vérifiée authentique.

10. Programme pour un module de sécurité, comprenant des instructions de code de programme destinées à commander l'exécution des étapes du procédé de téléchargement selon l'une des revendications 1 à 7 mises en œuvre par le module, lorsque ledit programme est exécuté par ledit module.

11. Support d'enregistrement lisible par un module de sécurité sur lequel est enregistré le programme selon la revendication 10.

## Patentansprüche

1. Verfahren zum Herunterladen eines Profils für den Zugang zu einem Kommunikationsnetzwerk durch ein Sicherheitsmodul (20, 21), wobei das Zugangsprofil für einen Nutzer durch einen Netzwerkbetreiber erstellt wird und von einem Server (30) abrufbar ist, der dazu konfiguriert ist, dem Sicherheitsmodul das Zugangsprofil durch Herunterladen bereitzustellen, wobei das Verfahren Folgendes beinhaltet:
- Erhalten (E1), durch das Sicherheitsmodul, eines ersten, durch den Netzwerkbetreiber erstellten Prüfdatenelements;
- Einrichten einer sicheren Herunterladesitzung, in deren Verlauf von dem Server und dem Sicherheitsmodul gemeinsam Sitzungsschlüssel generiert werden und bei der der Server mit Hilfe eines öffentlichen Herunterladeschlüssels durch das Sicherheitsmodul authentifiziert wird;
- Prüfen (E4), durch das Sicherheitsmodul, der Authentizität des öffentlichen Herunterladeschlüssels des Servers mit Hilfe des ersten Prüfdatenelements, welches es gestattet zu prüfen, ob der Server einen geheimen Herunterladeschlüssel verwendet, der dem entspricht, der durch den Netzwerkbetreiber bei der Erstellung des ersten Prüfdatenelements vorgesehen wurde;
- wenn der öffentliche Herunterladeschlüssel bei der Prüfung als nicht authentisch erkannt wird, Abbrechen des Herunterladens des Zugangsprofils.

2. Verfahren zum Herunterladen nach Anspruch 1, wobei das Einrichten der sicheren Herunterladesitzung durch ein Empfangen, durch das Sicherheitsmodul, einer Anfrage (M7) nach Eröffnung einer sicheren Herunterladesitzung ausgelöst wird, wobei die Anfrage einen durch den Server generierten öffentlichen Schlüssel zum einmaligen Gebrauch für eine Sitzungsschlüsselvereinbarung und eine Signatur der Daten der Anfrage mit Hilfe eines privaten Herunterladeschlüssels des Servers, mit dem der öffentliche Herunterladeschlüssel assoziiert ist, beinhaltet.

3. Verfahren zum Herunterladen nach Anspruch 2, wobei die Prüfung der Authentizität bei einem Empfangen (E3), durch das Sicherheitsmodul, einer Anfrage nach einer Vorbereitung des Herunterladens durchgeführt wird, wobei die Anfrage ein Zertifikat eines öffentlichen Herunterladeschlüssels des Servers beinhaltet, vor dem Empfangen der Anfrage nach Eröffnung einer sicheren Herunterladesitzung.

4. Verfahren zum Herunterladen nach Anspruch 2, wobei das Sicherheitsmodul ferner ein zweites Prüfdatenelement erhält, mit Hilfe des zweiten Prüfdatenelements einen öffentlichen Authentifizierungsschlüssel des Servers, der während einer Authentifizierungsphase des Servers durch das Sicherheitsmodul erhalten wurde, prüft und, wenn der öffentliche Authentifizierungsschlüssel bei der Prüfung als nicht authentisch erkannt wird, das Herunterladen des Zugangsprofils abbricht.

5. Verfahren zum Herunterladen nach Anspruch 4, wobei die Prüfung der Authentizität des öffentlichen Authentifizierungsschlüssels während der Authentifizierungsphase des Servers durch das Sicherheitsmodul durchgeführt wird.

6. Verfahren zum Herunterladen nach Anspruch 4, wobei die Prüfung der Authentizität des öffentlichen Authentifizierungsschlüssels im Anschluss an das Empfangen der Anfrage nach Eröffnung einer sicheren Herunterladesitzung ausgelöst wird.

7. Verfahren zum Herunterladen nach Anspruch 1, wobei das Einrichten der sicheren Herunterladesitzung durch ein Empfangen, durch das Sicherheitsmodul, einer Anfrage (N10) nach Ausführung eines Sicherheitsvorgangs ausgelöst wird, wobei die Anfrage den öffentlichen Herunterladeschlüssel beinhaltet, der dazu bestimmt ist, an der Generierung der Sitzungsschlüssel mitzuwirken.

8. Sicherheitsmodul (20, 21), das Folgendes beinhaltet:
- eine Sende-/Empfangsteilmodul, das dazu angeordnet ist, ein erstes, durch einen Netzwerkbetreiber erstelltes Prüfdatenelement zu erhalten;
- ein Steuerungsteilmodul, das dazu angeordnet ist, eine sichere Herunterladesitzung einzurichten, in deren Verlauf von einem Server, von dem ein durch den Netzwerkbetreiber erstelltes Zugangsprofil durch Herunterladen abrufbar ist, und dem Sicherheitsmodul gemeinsam Sitzungsschlüssel generiert werden und bei der der Server mit Hilfe eines öffentlichen Herunterladeschlüssels durch das Sicherheitsmodul authentifiziert wird, die Authentizität des öffentlichen Herunterladeschlüssels des Servers mit Hilfe des ersten Prüfdatenelements zu prüfen, welches es gestattet zu prüfen, ob der Server einen geheimen Herunterladeschlüssel verwendet, der dem entspricht, der durch den Netzwerkbetreiber bei der Erstellung des ersten Prüfdatenelements vorgesehen wurde, und einen Abbruch des Herunterladens des Zugangsprofils auszulösen, wenn der öffentliche Herunterladeschlüssel bei der Prüfung als nicht authentisch erkannt wird.

9. Mobiles Endgerät, das dazu angeordnet ist, mit einem Server zu kommunizieren, von dem ein durch einen Netzwerkbetreiber erstelltes Zugangsprofil durch Herunterladen abrufbar ist, wobei das mobile Endgerät Folgendes beinhaltet:
- ein Sicherheitsmodul (20, 21);
- ein Modul zum Erhalten eines ersten, durch den Netzwerkbetreiber erstellten Prüfdatenelements;
- ein Steuerungsmodul, das dazu angeordnet ist, eine sichere Herunterladesitzung einzurichten, in deren Verlauf von dem Server und dem Sicherheitsmodul gemeinsam Sitzungsschlüssel generiert werden und bei der der Server mit Hilfe eines öffentlichen Herunterladeschlüssels durch das Sicherheitsmodul authentifiziert wird, die Authentizität eines öffentlichen Herunterladeschlüssels des Servers mit Hilfe des ersten Prüfdatenelements zu prüfen, welches es gestattet zu prüfen, ob der Server einen geheimen Herunterladeschlüssel verwendet, der dem entspricht, der durch den Netzwerkbetreiber bei der Erstellung des ersten Prüfdatenelements vorgesehen wurde, und einen Abbruch des Herunterladens des Zugangsprofils auszulösen, wenn der öffentliche Herunterladeschlüssel bei der Prüfung als nicht authentisch erkannt wird.

10. Programm für ein Sicherheitsmodul, das Programmcodeanweisungen beinhaltet, die dazu bestimmt sind, die Ausführung der Schritte des Verfahrens zum Herunterladen nach einem der Ansprüche 1 bis 7, die durch das Modul implementiert werden, anzuordnen, wenn das Programm durch das Modul ausgeführt wird.

11. Durch ein Sicherheitsmodul lesbares Aufzeichnungsmedium, auf dem das Programm nach Anspruch 10 aufgezeichnet ist.

## Claims

1. Method for downloading an access profile for access to a communication network by a security module (20, 21), said access profile being prepared for a user by a network operator and available at a server (30) configured to provide by downloading to the security module said access profile, said method comprising:
- an obtaining (E1) by the security module of a first verification datum prepared by said network operator;
- an establishment of a secure downloading session, in the course of which session keys are generated jointly between the server and the security module and in which the server is authenticated by the security module by means of a public downloading key;
- a verification (E4) by the security module of the authenticity of the server's public downloading key by means of the first verification datum making it possible to verify that the server uses a secret downloading key corresponding to that envisaged by the network operator during the preparation of the first verification datum;
- when the public downloading key is not verified authentic, an interruption of the downloading of the access profile.

2. Downloading method according to Claim 1, in which the establishment of the secure downloading session is triggered by a reception by the security module of a request (M7) to open a secure downloading session, said request comprising a one-time public key, generated by the server, for a matching of session keys and a signing of the data of said request by means of a private downloading key, with which the public downloading key is associated, of the server.

3. Downloading method according to Claim 2, in which the verification of the authenticity is performed during a reception (E3) by the security module of a request for preparation of the downloading, said request comprising a public downloading key certificate of the server, prior to the reception of the request to open a secure downloading session.

4. Downloading method according to Claim 2, in which the security module furthermore obtains a second verification datum, verifies by means of the second verification datum a public authentication key of the server, received during a phase of authentication of the server by the security module, and when the public authentication key is not verified authentic, interrupts the downloading of the access profile.

5. Downloading method according to Claim 4, in which the verification of the authenticity of the public authentication key is performed during the phase of authentication of the server by the security module.

6. Downloading method according to Claim 4, in which the verification of the authenticity of the public authentication key is triggered subsequent to the reception of the request to open a secure downloading session.

7. Downloading method according to Claim 1, in which the establishment of the secure downloading session is triggered by a reception by the security module of a request (N10) for executing a security operation, said request comprising the public downloading key intended to contribute to the generation of the session keys.

8. Security module (20, 21) comprising:
- a send/receive sub-module, designed to obtain a first verification datum prepared by a network operator;
- a control sub-module, designed to establish a secure downloading session, in the course of which session keys are generated jointly between a server, at which an access profile prepared by said network operator is available for downloading, and the security module and in which the server is authenticated by the security module by means of a public downloading key, to verify the authenticity of the server's public downloading key by means of the first verification datum making it possible to verify that the server uses a secret downloading key corresponding to that envisaged by the network operator during the preparation of the first verification datum and to trigger an interruption of the downloading of the access profile when the public downloading key is not verified authentic.

9. Mobile terminal, designed to communicate with a server at which an access profile prepared by a network operator is available for downloading, said mobile terminal comprising:
- a security module (20,21);
- a module for obtaining a first verification datum prepared by said network operator;
- a control module, designed to establish a secure downloading session, in the course of which session keys are generated jointly between the server and the security module and in which the server is authenticated by the security module by means of a public downloading key, to verify the authenticity of a public downloading key of the server by means of the first verification datum making it possible to verify that the server uses a secret downloading key corresponding to that envisaged by the network operator during the preparation of the first verification datum and to trigger an interruption of the downloading of the access profile when the public downloading key is not verified authentic.

10. Program for a security module, comprising program code instructions intended to drive the execution of the steps of the downloading method according to one of Claims 1 to 7 which are implemented by the module, when said program is executed by said module.

11. Recording medium readable by a security module on which the program according to Claim 10 is recorded.
